# EUROPEAN PATENT APPLICATION

(11) **EP 0 981 231 A1**
(43) Date of publication of application: **23.02.2000**
(21) Application number: 99306303.1
(22) Date of filing: 10.08.1999
(51) Int. Cl.: H04L 12/58, H04M 3/533, G06F 17/60

(54) **Generalized messaging construct**

(30) Priority: 18.08.1998 US 135577
(71) Applicant: LUCENT TECHNOLOGIES INC., Murray Hill, New Jersey 07974-0636 (US)
(72) Inventor: Chao, Edward T., Morristown, New Jersey 07960 (US); Freidenfelds, John, Madison, New Jersey 07940 (US)
(74) Representative: Johnston, Kenneth Graham

(57) **Abstract**

A generalized method for transmitting multimedia messages via a network is defined, where messages are broken down into components of various multimedia types. The originator of the multimedia message and/or an agent in the network provides an alternative rendering of each multimedia component of the original message. This provides the recipient of the message, who may be unable to render one or more of the original multimedia message components due to access system and/or end device incompatibility, with an alternative means for receiving the meaning of the originator's intended message, thereby facilitating multimedia messaging between various communications end devices.

## Description

### Field of the Invention

The present invention relates to a method of facilitating telecommunications messaging and more specifically to a method of facilitating multimedia messaging between various communications devices and access networks.

### Description of Related Art

In recent years, there has been rapid development in the field of telecommunications. The field of telecommunications broadly involves electromagnetic transmission of voice, data, video or other types of information from one location to another. Telecommunications messaging such as electronic and voicemail messaging have become important tools in modern society.

The emergence of multimedia messaging has added another dimension to telecommunications messaging. Multimedia messaging generally refers to transmission of messages having multiple forms, such as voice, text, images, data, and video. An Internet web page, which incorporates multiple forms, such as text and images, is one example of multimedia messaging.

The convergence of multimedia messaging and electronic messaging has made it possible for users to send and receive multimedia messages between personal computers. Traditionally, a "least common denominator" approach has been taken with respect to the transfer of messages between communications devices. That is, communication is possible only where the communication devices have common multimedia capabilities and employ common formats. For example, electronic mail (e-mail) is possible among personal computers that would otherwise be incompatible because all personal computers are capable of rendering plain text. Similarly, a standard facsimile (fax) format serves as a common format for transmission of images.

A significant shortcoming of this "least common denominator" approach is that it fails to exploit the available multimedia capabilities of the communications devices and prevents multimedia messaging between communications devices having different multimedia capabilities.

Recently, there have been attempts to facilitate communication between communications devices having different multimedia capabilities; for example, communication between a personal computer and a fax machine, between a telephone and a pager, or between a personal computer and a pager. Translating a message from text-to-fax format has made it possible for a fax machine to receive a text message from a personal computer. Further, alphanumeric voicemail, a service where a caller leaves a voicemail message, and then a human operator immediately transcribes the message and sends it to a pager, permits a pager to indirectly receive a message from a telephone. Also, software has been developed that enables a personal computer to transmit and forward an alphanumeric message to a pager.

However, these communications devices still lack the necessary multimedia capabilities that would enable a person to hear a fax message over the phone, receive voice messages on a fax machine, dictate e-mail from a remote location, or convert fax or voice mail to e-mail.

Moreover, as providers strive to meet increasing demand for unified multimedia messaging, users will be faced with an increasing number of choices for sending and receiving messages. Due to the disparate nature of these communications devices and access systems, incompatibilities have and will continue to arise in the transfer of multimedia messages. Continued proliferation of different kinds of communications devices will increase the likelihood of incompatibility, and ad hoc translation for each and every device is not an effective solution.

### Summary Of The Invention

The present invention facilitates communication between persons as well as communication between information systems by providing the recipient of a message with an alternative means for receiving the meaning of an originator's intended message. When an originator transmits an original multimedia message to a recipient, the recipient may be unable to render one or more of the original multimedia message components due to access system and/or end device incompatibility. The system and method of the present application separates the original multimedia message into components of various multimedia types and generates alternative renderings of each multimedia component of the original message. With this system, recipients are able to receive multimedia messages rendered in standardized formats that are compatible with the multimedia capabilities of the recipient's end device.

### Brief Description Of The Drawings

Figure 1 illustrates a logical network architecture in one embodiment of the present invention;
Figure 2 illustrates a logical network architecture in another embodiment of the present invention in which a message is communicated to a plurality of recipients;
Figure 3 illustrates a logical network in another embodiment of the present invention in which one recipient network agent services a plurality of recipient elements;
Figure 3A illustrates a logical network in another embodiment of the present invention in which one recipient element is serviced by a plurality of recipient network agents;
Figure 4 illustrates a flow chart for sending a message according to the present invention;
Figure 5 illustrates a flow chart for generating a generalized message according to the present invention;
Figure 6 illustrates a generalized messaging construct matrix in one embodiment of the present invention; and
Figure 7 illustrates a generalized messaging construct matrix for a message with text and image as the native components.

### Detailed Description Of The Invention

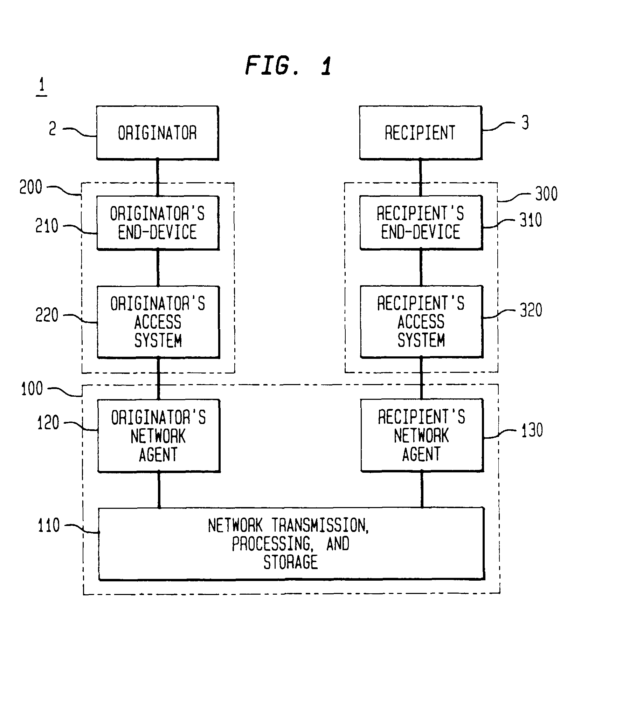

Figure 1 illustrates a logical network architecture 1 of the present invention for communicating a message between an originator 2 and a recipient 3. As shown in Figure 1, a network element 100 connects an originator element 200 and a recipient element 300. The network element 100 includes a network transmission, processing, and storage element 110, an originator network agent 120, and a recipient network agent 130. The originator element 200 includes an originator end device 210 and an originator access system 220. Similarly, each recipient element 300 includes a recipient end device 310 and a recipient access system 320.

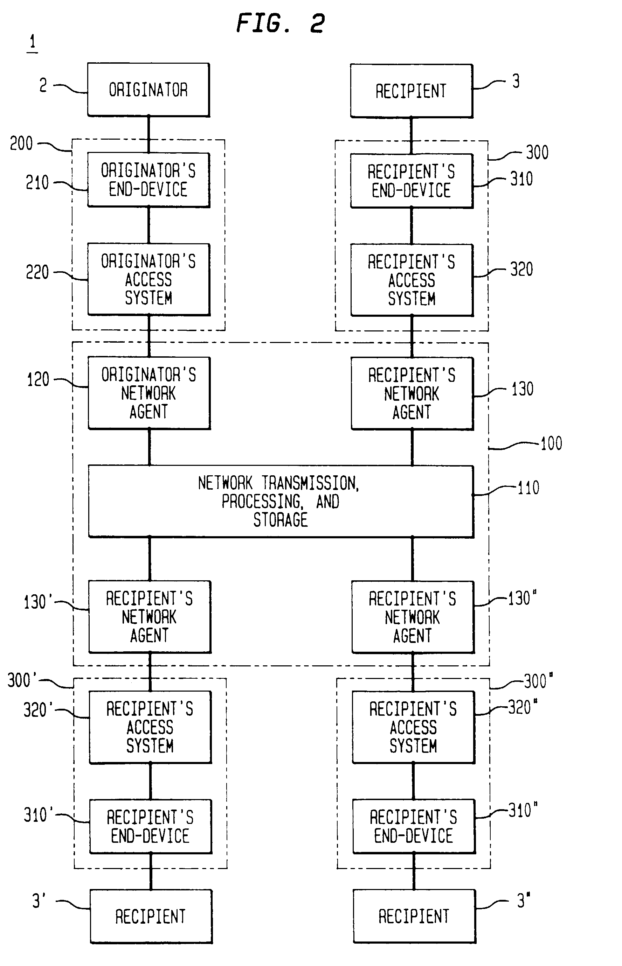

Figure 2 illustrates one example of a logical network architecture 1 of the present invention in which an originator 2 communicates a message to a plurality of recipients 3, 3' and 3".

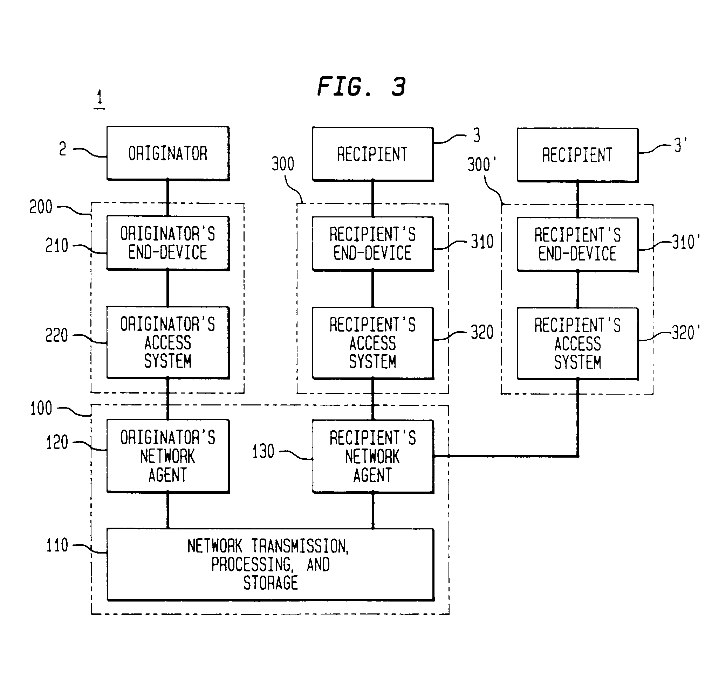

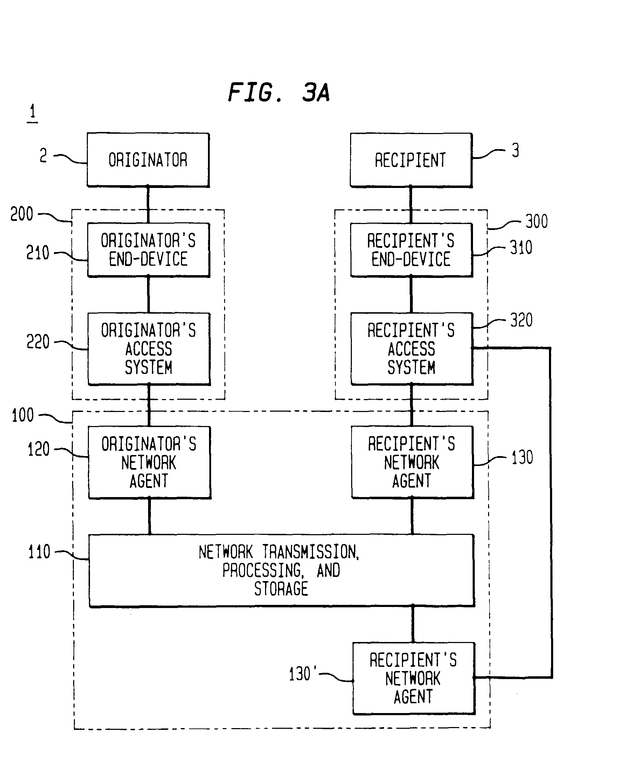

Figure 3 illustrates one example of a logical network architecture 1 of the present invention in which one recipient network agent 150 services a plurality of recipient elements 300 and 300'.

Figure 3A illustrates another example of a logical network architecture 1 in which recipient 3 is served by two agents, for example, for purposes of load-sharing, redundancy, or specialized functionality.

Other variations of the logical network architectures shown in Figures 1-3 are possible as would be obvious to one of ordinary skill in the art. For example, a plurality of end devices can be connected to one access system.

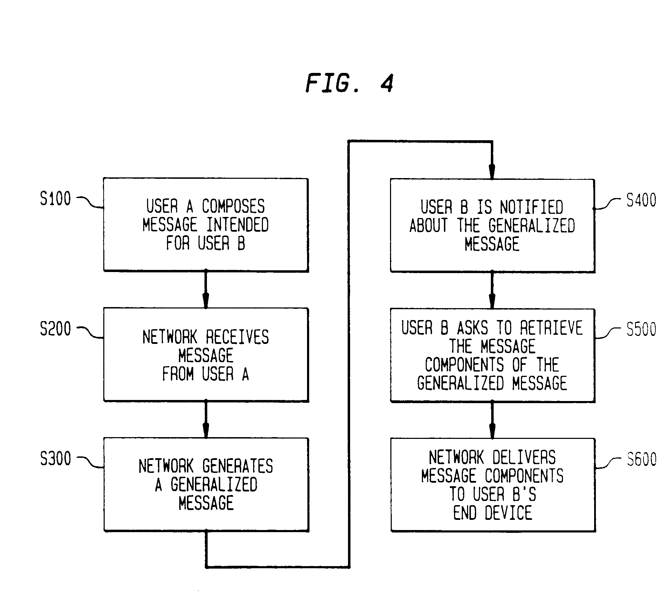

Figure 4 illustrates a flow chart for the general operation of the present invention for sending a message. In Figure 3, User A is the originator 2 of the message and User B is the recipient 3 ofthe message.

Initially, User A composes a multimedia message intended for User B in Step S100. The network element 100 receives the multimedia message from User A in Step S200. Then, the network element 100 generates a generalized message in Step S300. User B is notified of the existence of the generalized message stored in the network element 100 in Step S400. User B then requests retrieval of the stored message in Step S500. Finally, the network element 100 transmits multimedia message components ofthe generalized message to User B in Step S600.

A more detailed description of the operation of the present invention will now be given with reference to the figures.

In Step S 100, User A composes a multimedia message intended for User B. User A is the originator 2 and User B represents one of the intended recipients 3. According to the present invention, the originator 2 uses an originator end device 210 to compose the multimedia message and to connect with the network element 100. The originator end device 210 can be any device capable of composing a multimedia message. The originator end device also may be capable of varying its multimedia capabilities. That is, the originator end device may be capable of selecting which multimedia capabilities are to be enabled. A personal computer and a video telephone are examples of originator end devices.

The originator end device 210 connects to the network element 100 by way of an originator access system 220. The originator access system 220 may be a wireless and/or wireline system.

In Step S200, the network element 100 receives the message from User A. The network element 100 can be any type of network that has the ability to transmit, process, and store messages between the originator element 200 and the recipient element 300 and their respective end devices 210 and 310. Typically, the network element 100 has more processing power, built-in memory, and throughput capacity than the originator element 200 and recipient element 300.

The network element 110 includes a network transmission, processing, and storage element 110, an originator network agent 120 and a recipient network agent 130. The originator network agent 120 and the recipient network agent 130 act on behalf of the originator 2 and the recipient 3, respectively, and function to facilitate the generalized messaging construct. Network agent 120 or 130 can be a human operator and/or a software "object" such as a file, web page, application, data base or any other item on a computer system. The functions performed by the network agents 120 and 130 may include receipt, transmission, and notification of multimedia messages; detection of multimedia capabilities of user end devices; separation and analysis of multimedia message components; determination of alternative renderings to be generated; and/or generation of alternative renderings, specifications for generating alternative renderings, and generalized messages.

Network agents 120 and 130 may be centralized or distributed. That is, network agents 120 and 130 may be implemented as software in a central-controlled processor associated with the networks, or they may be software in adjunct processors that communicate with the network, or they may be implemented as software "objects" that utilize various network resources as needed.

In Figure 1, the situation in which there is a one-to-one logical association between network agents and end users is shown. However, it is also possible for network agents to service multiple end users. For example, the situation in which one recipient network agent 130 services multiple recipients 3 and 3' is shown in Figure 3. Similarly, multiple agents, perhaps each specializing in a set of functions, could serve the same originator or the same recipient, as shown in Figure 3A.

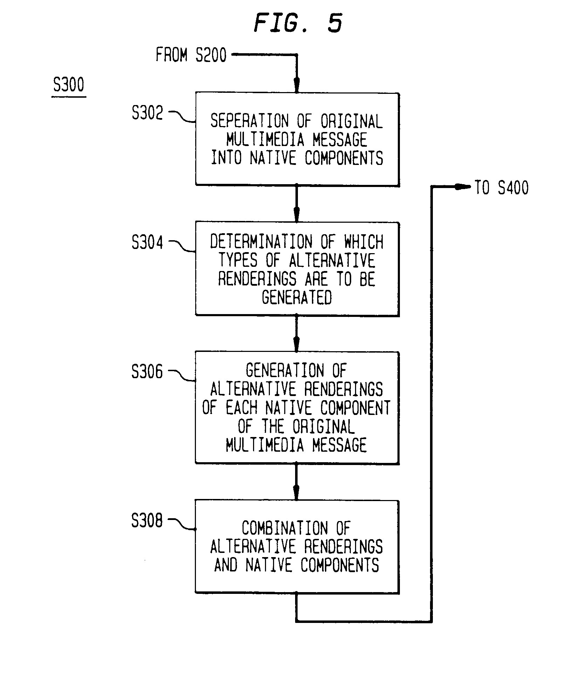

In Step S300, the network element 100 generates a generalized message. The method of generating the generalized message will now be described with reference to Figure 5. After the originator 2 composes an original message, the original message is separated into its various multimedia message components in Step 302. The separated components of the original multimedia message are referred to as the native components of the multimedia message. The separation of the multimedia message S302 may be performed by either the originating element 200 or by the network element 100.

Typically, separation ofthe multimedia message components S302 is accomplished by separately capturing each multimedia element, as with recordings of voice and encoding of video images. In general, processing may be required to create or recreate the standardized components recognized by the network.

Separation into multimedia components generally will also require the capture or creation of information that facilitates coordination among components - for example, time stamps stored with voice and video components that enable synchronized playback; similarly placement information for images to be interspersed with text. Such coordination information may be made a part of each component, or may be stored for the message as a whole.

After separation of the multimedia message components S302, the next step is determination of which types of alternative renderings are to be generated in Step 304. Determination of which types of alternative renderings are generated S304 may be manual or automatic and may be performed by the network element 100 and/or the originator element 200.

Determination of which types of alternative rendering are to be generated S304 may be accomplished by sensing the multimedia capabilities of the recipient element 300. Sensing of the multimedia capabilities of the recipient elements is performed by the network element 100. Such multimedia capabilities include user-interface capability, protocol capability, format capability, bit rate capability, bandwidth capability, or any other characteristic apparent to one of ordinary skill in the art. For example, if a recipient end device is sensed to be a telephone, which is incapable of displaying text, the text component of the originator's message is converted to audio.

Alternatively, determination of which types of alternative rendering are to be generated S304 may be accomplished by setting the network element 100 or originator element 200 to generate a predetermined set of alternative renderings. In this case, alternative rendering generation is autonomous. That is, predetermined default information may be provided in order to standardize the generalized messages when particular alternative renderings have not been specified. This would be desirable, for example, if the recipient or potential recipient and/or recipient's user capabilities were unknown at the time the message was originated.

Once the native components of the original multimedia message have been separated in Step S302 and which alternative renderings to be generated have been determined in Step S304, alternative renderings are generated for each native component in Step S306. Alternative rendering generation S306 refers to converting the native components of the multimedia message from one form to another in order to facilitate communication.

General examples of alternative rendering generation S306 includes conversion from one type of media component to another, conversion from one type of formatting to another, conversion from one type of protocol to another, conversion from one type of bit rate to another, conversion from one bandwidth to another and/or any other type of conversion that would be apparent to one of ordinary skill in the art.

Specific examples of alternative renderings include a rendering of an image component as text and/or voice; a rendering of a voice component as text and/or image; a rendering of a full-motion video component as image and/or sound; a rendering of a GIF (Graphics Interchange Format) image as a JPEG (Joint Photographic Experts Group) image; and rendering a large television video file, such as a HDTV (High Density Television) file, as a lower bit rate video format.

Alternative rendering generation S306 may be manual or automatic and may be performed by the network element 100 and/or by the originator element 200. For example, the originator 2 may provide alternative renderings manually by direct interaction with the network element 100 or through local means provided on the originator end-device 210. Also, one or more originator network agents 120 may provide manual or automatic alternative rendering generation S306 alone or in addition to the originator element end-device 210.

Generating alternative renderings S306 of native multimedia components may entail: 1) automatic media conversions, such as text-to-image or automatic speech recognition; 2) data compression and/or reformatting (e.g., convert high-resolution color image to low-resolution black and white); 3) automatic intelligent extraction of suitable and/or core information from the native components - for example, selection of key video frames for an alternative rendering as image, or key words from a large text message for rendering as a "brief'; and/or 4) interactions with the originator and/or originator's intelligent agent, including the use of stored profile or status information, and queries of the originator and/or originator's agent.

Because of the obvious differences in media such as voice, image, and text, the alternative renderings will generally only approximate the information contained in the native components. For example, a verbal description of a "video" component's salient features, provided by the originator, may serve as the alternative "voice" rendering; the mathematical parameters of a geometric shape, extracted by pattern matching software, may serve as an alternative "text" rendering of an "image" component.

In some configurations, some or all alternative renderings may be specified by the message originator and/or originator's intelligent agent, but not actually carried out unless and until they are needed. For example, the alternative "image" rendering of a "text" message may be specified by the originator as a standard Group III FAX conversion. But the message may be stored and transported in its "text" form and actual text-to-FAX conversion may be deferred until some recipient requires it. In this case, the alternative rendering initially exists only in the form of the Group III FAX specification and not the FAX image itself.

As in the process of separation of the message into components, information may also be created and stored as part of the alternative renderings, that facilitates coordinated regeneration of the components (e.g., time-stamps in "voice" components).

Once the alternative renderings have been generated in Step S306, the alternative renderings are combined with the native components in Step S308 in order to form a generalized message. That is, the generalized message is formed of a set of multimedia message components made up of both the native components ofthe original multimedia message and the alternative renderings of the native components.

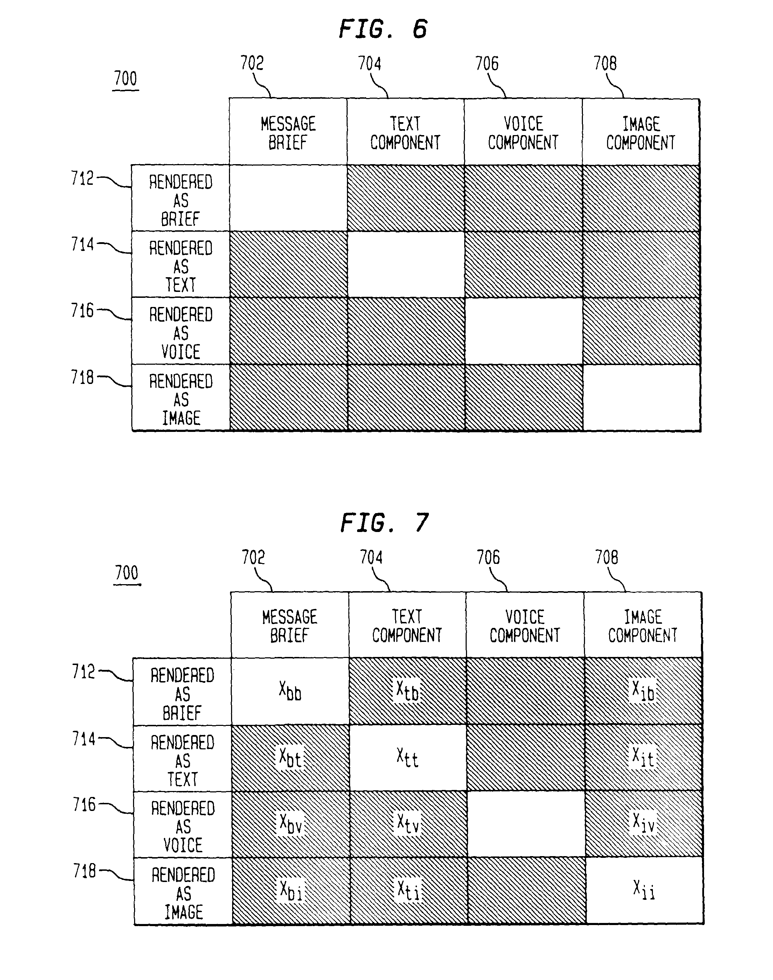

Details of the generalized message are given with reference to Figure 6, which illustrates a generalized messaging construct matrix 700 of the present invention. The generalized message construct matrix 700 is representative of one possible set of multimedia message components that may be adopted in the present invention. In Figure 3, the set of media components includes a message brief component 702, a text component 704, a voice component 706, and an image component 708.

The message brief component 702 of the generalized message provides a high-level description of the message contents and construct so that the network element 100 or recipient element 300 can readily ascertain the meaning ofthe message. The message brief component 702 can include information such as the subject of the message or subject line, the synchronization characteristics of the message, the size of the message, and any other information that would assist the recipient 3, the recipient element 300, the network element 100 or the recipient network agent 130 during transmission and receipt of the generalized message. The message brief component 702 may also contain information mandated by the system in order to receive a message, for example, billing information, security information, and the like.

Other examples of multimedia message components include video components, sound components and data components. A set of multimedia message components may be formed of any combination of multimedia message components and may include other media components, which are not identified herein but would be apparent to one of ordinary skill in the art. Furthermore, the set of multimedia message components can be standardized for a particular implementation or a class of applications in order to facilitate unified messaging between several different types of end devices and access systems.

A generalized message can be viewed as the generalized message construct matrix 700 illustrated in Figure 6, where columns 702, 704, 706 and 708 represent the type of component and rows 712, 714, 716 and 718 represent the type of rendering. In Figure 6, the white blocks of the matrix 700 represent the native components of a multimedia message and the shaded blocks of the matrix represent alternative renderings of the native components. In general, message components of the same type are stored in columns as shown in Figure 6, and stored components generally are retrieved row by row.

Each block of the generalized messaging construct matrix 700 contains information useful for rendering components of the multimedia message. This information may include characteristics such as media type, encoding scheme, or size of the component. In addition, there may be multiple encodings for each block for accommodating various recipient end devices and access systems.

In Step S400, User B is notified of the existence of the generalized message stored in the network element. In general, notification is provided by the recipient element 300, specifically the recipient end device 310.

In Step S500, User B requests retrieval of the stored message. In this example of the present invention, each recipient 3 uses a recipient end device 310 and a recipient access system 320 to retrieve message components of the generalized message. The recipient end device 310 may have the same or different media capabilities than the originator end device 210. Like the originator end device 210, the recipient end device may have multimedia capabilities that may be varied.

In Step S600, the network element 100 transmits the multimedia message components of the generalized message to User B. The entire generalized message may be transmitted to the recipient element 300. Alternatively, only those multimedia components corresponding to the multimedia capabilities of the recipient element 300 may be transferred.

Determination of which multimedia components of the generalized message are to be transferred may be decided by the network element 100, the originator element 200, or the recipient element 300, or any component thereof. The determination may be made based on knowledge, detection, or prediction of the multimedia capabilities of the recipient element 200.

Once the generalized message or components thereof are received by the recipient element 300, User B is able to use the recipient element 300 to view, hear or otherwise translate the message components. Further, User B may also select which of the received components to hear and/or view at a certain time. For example, when at a telephone, User B may select only the audio components of the generalized message even if image and text components have also been received. That is, User B may choose to listen to just the component that originated as voice (represented by the white block at the intersection of column 706 and row 716). Or, User B may listen to all of the components of row 716, thereby gaining the most complete understanding of the message that is possible with voice-only access. Moreover, User B may forward the generalized message or components thereof to another intended recipient.

In another embodiment of the present invention, the generalized message may not include generated alternative renderings. Rather, the generalized message may include specifications for generating alternative renderings of the native components. The specifications for generating alternative renderings are any instruction or other information which enables a recipient end user device to generate an alternative rendering. The specifications also may inform the recipient as to which alternative rendering or renderings will best convey the intended message of the originator. These specifications may be generated by the network element 100 and/or the originator element 200 and may be received by the network element 100 and/or the recipient element 300. Alternative renderings may be generated by the network element 100 and/or the recipient element according to alternative rendering specifications included in the generalized message.

Furthermore, additional alternative renderings or alternative rendering specifications may be generated and added to the generalized message. For example, the originator element 200 may specify one set of alternative renderings to be included in the generalized message. This set of alternative renderings may not be recognizable by all of the recipient elements 300. The network element 100 may sense the multimedia capabilities of the recipient element 300 and specify additional alternative renderings, which are able to be recognized by the recipient element 300, to be generated and included in the generalized message.

Similarly, the originator element 200 may specify one set of alternative rendering specifications to be included in the generalized message. This set of alternative rendering specifications may not be recognizable by all of the recipient elements 300, 300' and/or 300". The network element 100 may sense the multimedia capabilities of all the recipient element 300 and specify additional alternative rendering specifications, which are able to be recognized by all recipient element 300, to be included in the generalized message.

The present invention also encompasses the situation where the originator 2 and recipients 3 are not human end users. Rather, the originator 2 and recipients 3 can be centralized databases or other types of information sources.

Specific examples of the operation of the present invention will now be described to further illustrate the operation of the present invention with reference to Figure 7.

### Example 1

User A composes an original multimedia message with a brief component X_{bb}, a text component Xₜₜ, and an image component Xᵢᵢ. User A applies the generalized messaging construct to facilitate messaging so recipients having varying multimedia capabilities may access the multimedia message.

User A composes the message applying the generalized message matrix 700, as shown in Figure 7. The diagonal line of white blocks represents the original multimedia message components of the generalized message. The presence of a component is indicated by an "X". The first subscript indicates the native component and the second subscript indicates how the component is rendered. For example, Xₜₜ is the text component of the original multimedia message rendered as text, while Xₜᵥ is the text component of the original multimedia message rendered as voice.

As shown in Figure 7, the original multimedia message includes a message brief component X_{bb}, a text component Xₜₜ, and an image component Xᵢᵢ as the native components of the multimedia message. Alternative renderings are then generated for each native component. The alternative renderings generated are X_{bt}, X_{bv}, X_{bi}, X_{tb}, Xₜᵥ, Xₜᵢ, X_{ib}, Xᵢₜ, and Xᵢᵥ. Namely, alternative renderings of text, voice, and image are generated for the native message brief component; alternative renderings of brief, voice, and image are generated for the native message text component; and alternative renderings of brief, text, and voice are generated for the native image component.

User A then downloads the generalized message, i.e., all components with an "X", to the network element where the generalized message is stored on a server.

User B, having a wireless phone as a recipient end device, is then notified of the stored generalized message via the screen on the phone. In this case, notification is triggered by User B's network agent.

User B then uses the wireless phone to access components of the generalized message. First, User B requests to hear the voice alternative rendering of the brief component X_{bv}. After listening to the brief, User B then requests to hear the voice alternative rendering of the text component Xₜᵥ. Finally, deciding that the voice alternative rendering of the image component Xᵢᵥ would not be helpful, User B decides to wait until he returns to his office where he then accesses the message from his personal computer and views the image rendering of the image component Xᵢᵢ.

### Example 2

For this example, the original multimedia message is the same; however, User A knows that User B is limited to a voice-interface end device. In this case, User A specifies that only voice alternative renderings are to be generated for each of the native components. That is, only X_{bv}, Xₜᵥ, and Xₜᵢ are generated.

As described above, the present invention will facilitate communication by fully utilizing the multimedia capabilities of a recipient. Multimedia messages are broken down into components of various multimedia types and alternative renderings of each multimedia component of the original message are generated. This provides the recipient of the message, who may be unable to render one or more of the original multimedia message components due to access system and/or end device incompatibility, with an alternative means for receiving the meaning of the originator's intended message.

Moreover, even if a message is encoded in a format which is not supported by the recipient end device or a recipient's access system does not have adequate bandwidth to receive transfer of a large video message, the recipient element receives alternative renderings of the original multimedia message components which can convey the meaning of the message to the recipient.

This system and an approach to multimedia messaging renders messages in multiple, standardized formats and facilitates communication with different end user devices. The generalized messaging construct permits end user devices to translate to and from a standardized set of multimedia message components rather than translating directly to and from the various formats of the end user devices themselves. Thus, the present invention assures end users of effective multimedia messaging.

## Claims

1. A method for communicating a multimedia message, comprising the steps of:
receiving a multimedia message including at least one native component;
generating at least one alternative rendering of said at least one native component;
generating a generalized message having a plurality of multimedia message components including said at least one native component and said at least one alternative rendering; and
transmitting at least one multimedia message component of said generalized message.

2. The method according to claim 1, further including the step of sensing multimedia capabilities of at least one recipient element.

3. The method according to claim 2, wherein said at least one multimedia message component of said generalized message is transmitted according to said sensed multimedia capabilities.

4. The method according to claim 2, wherein said at least one alternative rendering is generated according to said sensed multimedia capabilities.

5. The method according to claim 1, wherein said step of generating at least one alternative rendering includes either converting said at least one native component to a different media component type, or compressing data of said at least one native component, or converting a format of said at least one native component to a different format, or extracting core information from said at least one native component.

6. The method according to claim 5, wherein
said at least one native component is one of a text component, a voice component, an image component, a video component, a sound component, and a data component; and
said alternative rendering is a different one of a text component, a voice component, an image component, a video component, a sound component, and a data component.

7. The method according to claim 1, wherein each of said multimedia message components includes a standardized format.

8. The method according to claim 10, wherein said standardized format is one of a standardized text format, a standardized voice format, a standardized image format, a standardized video format, a standardized sound format, and a standardized data format.

9. The method according to claim 1, wherein said generalized message is either a standardized set of multimedia message components, or is automatically generated from said multimedia message.

10. The method according to claim 1, further comprising the step of adding specifications for generating at least one alternative rendering of at least one native component to said generalized message.

11. A method for communicating a multimedia message, comprising the steps of:
receiving a multimedia message having at least one native component;
generating a generalized message having a set of multimedia message components including said at least one native component and specifications for generating at least one alternative rendering of said at least one native component; and
transmitting at least one multimedia message component of said set of multimedia message components.

12. The method according to claim 11, further comprising the step of generating at least one alternative rendering from said specifications according to multimedia capabilities of a recipient element.

13. The method according to claim 11, further including the step of sensing multimedia capabilities of at least one recipient element.

14. The method according to claim 13, wherein said at least one multimedia message component is transmitted according to said sensed multimedia capabilities.

15. The method according to claim 13, wherein said specifications for generating at least one alternative rendering are generated according to said sensed multimedia capabilities.

16. The method according to claim 11, wherein said generalized message is automatically generated from said multimedia message.

17. Apparatus for communicating a multimedia message, comprising:
means for receiving a multimedia message including at least one native component;
means for generating at least one alternative rendering of said at least one native component;
means for generating a generalized message having a plurality of multimedia message components including said at least one native component and said at least one alternative rendering; and
means for transmitting at least one multimedia message component of said generalized message.

18. Apparatus for communicating a multimedia message, comprising:
means for receiving a multimedia message having at least one native component;
means for generating a generalized message having a set of multimedia message components including said at least one native component and specifications for generating at least one alternative rendering of said at least one native component; and
means for transmitting at least one multimedia message component of said set of multimedia message components.
